# EUROPEAN PATENT APPLICATION

(11) **EP 4 715 682 A1**
(43) Date of publication of application: **25.03.2026**
(21) Application number: 24806432.1
(22) Date of filing: 09.05.2024
(51) Int. Cl.: G06N 5/00, H04W 72/00

(54) **MODEL PROCESSING METHOD AND APPARATUS, AND TERMINAL AND NETWORK-SIDE DEVICE**

(30) Priority: 16.05.2023 CN 202310551011
(71) Applicant: Vivo Mobile Communication Co., Ltd., Dongguan, Guangdong 523863 (CN)
(72) Inventor: ZHOU, Tong, Dongguan, Guangdong 523863 (CN); QIN, Fei, Dongguan, Guangdong 523863 (CN); SUN, Peng, Dongguan, Guangdong 523863 (CN); YUAN, Yannan, Dongguan, Guangdong 523863 (CN)
(74) Representative: Conti, Marco
(86) International application number: PCT/CN2024/091815
(87) International publication number: WO 2024/235080

(57) **Abstract**

This application discloses a model processing method and apparatus, a terminal, and a network side device, and belongs to the field of communication technologies. The model processing method in embodiments of this application includes: obtaining, by a first device, first information and second information, where the first information is for determining target data for target model inference, and the second information is for indicating a mapping relationship between the target data for the target model inference and an input of a target model; performing, by the first device, data acquisition based on the first information, to obtain the target data; and determining, by the first device, input data of the target model based on the second information and the target data.

## Description

### CROSS-REFERENCE TO RELATED APPLICATIONS

This application claims priority to Chinese Patent Application No. 202310551011.8 filed on May 16, 2023, which is incorporated herein by reference in its entirety.

### TECHNICAL FIELD

This application relates to the field of communication technologies, and specifically, to a model processing method and apparatus, a terminal, and a network side device.

### BACKGROUND

In mobile communication systems, there are more use cases incorporating artificial intelligence (Artificial Intelligence, AI), for example, AI-based channel state information (Channel State Information, CSI) feedback compression, AI-based beam management, AI-based positioning, Al-based energy saving, and AI-based load balancing. Currently, an AI use case is usually predefined, and input data of an AI model is also predefined. An inference device obtains model input data needed for inference based on a predefined procedure. Therefore, existing technologies have a problem of poor flexibility in selecting the input data of the AI model.

### SUMMARY

Embodiments of this application provide a model processing method and apparatus, a terminal, and a network side device, to resolve a problem of poor flexibility in selecting input data of an AI model.

According to a first aspect, a model processing method is provided. The method includes:
obtaining, by a first device, first information and second information, where the first information is for determining target data for target model inference, and the second information is for indicating a mapping relationship between the target data for the target model inference and an input of a target model;
performing, by the first device, data acquisition based on the first information, to obtain the target data; and
determining, by the first device, input data of the target model based on the second information and the target data.

According to a second aspect, a model processing method is provided. The method includes:
sending, by a second device, first information and second information to a first device, where
the first information is for determining target data for target model inference, and the second information is for indicating a mapping relationship between the target data for the target model inference and an input of a target model.

According to a third aspect, a model processing apparatus is provided. The apparatus includes:
an obtaining module, configured to obtain first information and second information, where the first information is for determining target data for target model inference, and the second information is for indicating a mapping relationship between the target data for the target model inference and an input of a target model;
an acquiring module, configured to perform data acquisition based on the first information, to obtain the target data; and
a determining module, configured to determine input data of the target model based on the second information and the target data.

According to a fourth aspect, a model processing apparatus is provided. The apparatus includes:
a first sending module, configured to send first information and second information to a first device, where
the first information is for determining target data for target model inference, and the second information is for indicating a mapping relationship between the target data for the target model inference and an input of a target model.

According to a fifth aspect, a terminal is provided. The terminal includes a processor and a memory. The memory stores a program or instructions executable on the processor, and the program or the instructions, when executed by the processor, implement the steps of the model processing method according to the first aspect or the steps of the method according to the second aspect.

According to a sixth aspect, a terminal is provided. The terminal includes a processor and a communication interface, where
the communication interface is configured to obtain first information and second information when the terminal is the first device, where the first information is for determining target data for target model inference, and the second information is for indicating a mapping relationship between the target data for the target model inference and an input of a target model; and perform data acquisition based on the first information, to obtain the target data; and the processor is configured to determine input data of the target model based on the second information and the target data; and
the communication interface is configured to send first information and second information to a first device when the terminal is the second device, where the first information is for determining target data for target model inference, and the second information is for indicating a mapping relationship between the target data for the target model inference and the input of the target model.

According to a seventh aspect, a network side device is provided. The network side device includes a processor and a memory. The memory stores a program or instructions executable on the processor, and the program or the instructions, when executed by the processor, implement the steps of the model processing method according to the first aspect or the steps of the method according to the second aspect.

According to an eighth aspect, a network side device is provided. The network side device includes a processor and a communication interface, where
the communication interface is configured to obtain first information and second information when the network side device is the first device, where the first information is for determining target data for target model inference, and the second information is for indicating a mapping relationship between the target data for the target model inference and an input of a target model; and perform data acquisition based on the first information, to obtain the target data; and the processor is configured to determine input data of the target model based on the second information and the target data; and
the communication interface is configured to send first information and second information to a first device when the network side device is the second device, where the first information is for determining target data for target model inference, and the second information is for indicating a mapping relationship between the target data for the target model inference and the input of the target model.

According to a ninth aspect, a readable storage medium is provided. The readable storage medium stores a program or instructions, and the program or the instructions, when executed by the processor, implement the steps of the model processing method according to the first aspect or the steps of the method according to the second aspect.

According to a tenth aspect, a wireless communication system is provided. The system includes a first device and a second device, where the first device is configured to perform the steps of the method according to the first aspect, and the second device is configured to perform the steps of the method according to the second aspect.

According to an eleventh aspect, a chip is provided. The chip includes a processor and a communication interface, where the communication interface is coupled to the processor, and the processor is configured to run a program or instructions, to implement the method according to the first aspect, or implement the method according to the second aspect.

According to a twelfth aspect, a computer program/program product is provided. The computer program/program product is stored in a storage medium, and the program/program product is executed by at least one processor to implement the method according to the first aspect or implement the method according to the second aspect.

In this embodiment of this application, a first device obtains first information and second information, where the first information is for determining target data for target model inference, and the second information is for indicating a mapping relationship between the target data for the target model inference and an input of a target model; the first device performs data acquisition based on the first information, to obtain the target data; and the first device determines input data of the target model based on the second information and the target data. In this way, because the terminal determines the input data of the target model based on the mapping relationship between the target data for the target model inference and the input of the target model, flexibility in selecting input data of an AI model can be improved, thereby better obtaining effective information of a communication network, and improving a capability of optimizing the communication network by the AI model.

### BRIEF DESCRIPTION OF THE DRAWINGS

FIG. 1 is a schematic diagram of a network structure applicable to this application;
FIG. 2 is a first schematic flowchart of a model processing method according to an embodiment of this application;
FIG. 3 is a second schematic flowchart of a model processing method according to an embodiment of this application;
FIG. 4 is a third schematic flowchart of a model processing method according to an embodiment of this application;
FIG. 5 is an example diagram of resource measurement in a model processing method according to an embodiment of this application;
FIG. 6 is a fourth schematic flowchart of a model processing method according to an embodiment of this application;
FIG. 7 is a structural diagram of a model processing apparatus according to an embodiment of this application;
FIG. 8 is a structural diagram of another model processing apparatus according to an embodiment of this application;
FIG. 9 is a structural diagram of a communication device according to an embodiment of this application;
FIG. 10 is a structural diagram of a terminal according to an embodiment of this application; and
FIG. 11 is a structural diagram of a network side device according to an embodiment of this application.

### DETAILED DESCRIPTION

The terms "first", "second", and the like in this application are used for distinguishing between similar objects, but are not necessarily used for describing a specific order or sequence. It should be understood that, the terms used in this way are exchangeable in a proper case, so that embodiments of this application can be implemented in an order different from the order shown or described herein, and objects distinguished by "first" and "second" are usually of the same category and the number of the objects is not defined. For example, there may be one or more first objects. In addition, "or" in this application represents at least one of the connected objects. For example, "A or B" includes three solutions, i.e., in a solution 1, includes A and does not include B; in a solution 2, includes B and does not include A; and in a solution 3, includes both A and B. The character "/" generally represents an "or" relationship between the associated objects.

The term "indication" in this application may be a direct indication (or an explicit indication), or may be an indirectly indication (or an implicit indication). The direct indication may be understood as that a sending party explicitly notifies a receiving party of content in a sent indication, such as specific information, an operation that needs to be performed, or a request result. The indirect indication may be understood as that the receiving party determines corresponding information according to an indication sent by the sending party, or performs determination and determines an operation that needs to be performed or a request result according to a determination result.

It should be noted that, the technology described in the embodiments of this application is not limited to a long term evolution (Long Term Evolution, LTE)/an LTE-advanced (LTE-Advanced, LTE-A) system, and may be further applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), or another system. The terms "system" and "network" in the embodiments of this application are usually interchangeably used, and the technologies described may be applied to the systems and radio technologies mentioned above, and may also be applied to other systems and radio technologies. The following description describes a new radio (New Radio, NR) system for an example purpose, and an NR term is used in most of the following description. However, the technologies may also be applied to a system other than an NR system, like a 6th generation (6th Generation, 6G) communication system.

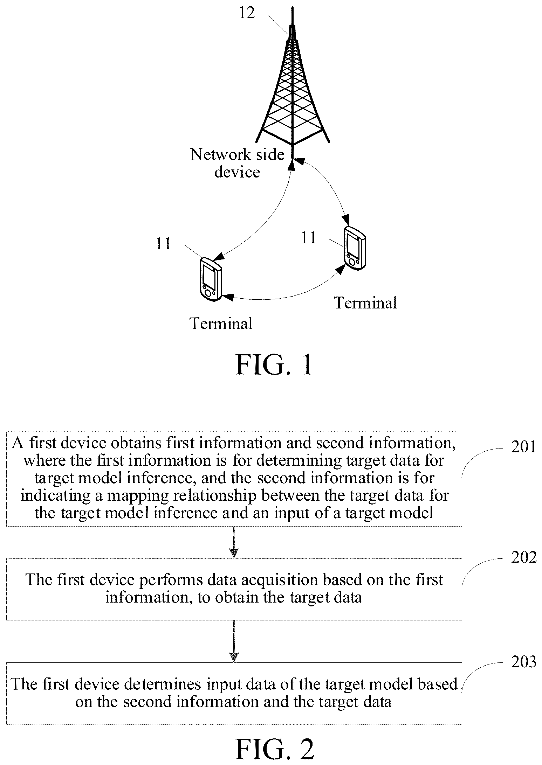

FIG. 1 is a block diagram of a wireless communication system applicable to an embodiment of this application. The wireless communication system includes a terminal 11 and a network side device 12. The terminal 11 may be a mobile phone, a tablet personal computer (Tablet Personal Computer), a laptop computer (Laptop Computer), a notebook computer, a personal digital Assistant (Personal Digital Assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR) device, a virtual reality (Virtual Reality, VR) device, a robot, a wearable device (Wearable Device), a flight vehicle (flight vehicle), vehicle user equipment (Vehicle User Equipment, VUE), ship user equipment, pedestrian user equipment (Pedestrian User Equipment, PUE), a smart household (a home device with a wireless communication function, like a refrigerator, a TV, a washing machine, or furniture), and terminal side devices such as a game console, a personal computer (Personal Computer, PC), an ATM or a self-service machine. The wearable device includes: a smart watch, a smart bracelet, a smart earphone, smart glasses, smart jewelry (a smart bangle, a smart wrist chain, a smart ring, a smart necklace, a smart anklet, a smart ankle chain, and the like), a smart wristband, smart clothes, and the like. The vehicle user equipment may also be referred to as an in-vehicle terminal, an in-vehicle controller, an in-vehicle module, an in-vehicle component, an in-vehicle chip, an in-vehicle unit, or the like. It needs to be noted that, a specific type of the terminal 11 is not limited in the embodiments of this application. The network side device 12 may include an access network device or a core network device. The access network device may also be referred to as a radio access network device (Radio Access Network, RAN) device, a radio access network function, or a radio access network unit. The access network device may include a base station, a wireless local area network (Wireless Local Area Network, WLAN) access point (Access Point, AS), a wireless fidelity (Wireless Fidelity, Wi-Fi) node, or the like. The base station may be referred to as a node B (Node B, NB), an evolved node B (eNB), a next generation node B (the next generation Node B, gNB), a new radio node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home node B (home Node B, HNB), a home evolved node B (home evolved Node B), a transmission reception point (Transmission Reception Point, TRP), or some other proper terms in the field. Provided that the same technical effect is achieved, the base station is not limited to a specific technical vocabulary. It needs to be noted that, in the embodiments of this application, only a base station in the NR system is used as an example for description, and a specific type of the base station is not limited.

The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It needs to be noted that, only a core network device in an NR system is used as an example in the embodiments of this application, and a specific type of the core network device is not limited.

Currently, an AI use case is usually predefined, and input data of an AI model is also predefined. An inference device may obtain model input data needed for inference based on a predefined procedure. However, in the future, an increasing quantity of AI use cases will appear in a mobile communication system, especially the AI use cases that appear in a system self-evolution process. For example, it is assumed that the AI model is sent by a network side to a terminal for inference, the terminal does not know how to generate input data matching model inference by means of data acquisition. Therefore, a general determining solution for the input data needs to be provided. In this way, a model processing method of this application is provided.

A model processing method provided in the embodiments of this application is described in detail below through some embodiments and application scenarios thereof with reference to the accompanying drawings.

Referring to FIG. 2, an embodiment of this application provides a model processing method. As shown in FIG. 2, the model processing method includes the following steps:
Step 201: A first device obtains first information and second information, where the first information is for determining target data for target model inference, and the second information is for indicating a mapping relationship between the target data for the target model inference and an input of a target model.
Step 202: The first device performs data acquisition based on the first information, to obtain the target data.
Step 203: The first device determines input data of the target model based on the second information and the target data.

In this embodiment of this application, the foregoing first device may be understood as a model inference device. Specifically, the first device may be a terminal or a network side device. The foregoing first information is information received by the first device from the second device, and the foregoing second information may be information specified in a protocol or information received from the second device. The second device may be the network side device or the terminal. For example, the foregoing first device is the terminal, and the second device is the network side device. Alternatively, the foregoing first device is the network side device, and the second device is the terminal.

It should be understood that, when the foregoing first device is the terminal, the foregoing first information may be understood as configuration information, and when the foregoing first device is the network side device, the foregoing first information may be understood as terminal requirement information.

Optionally, the foregoing data acquisition to obtain the target data may include performing resource measurement to obtain a measured result, a result of querying existing data, and the like. After the foregoing target data is obtained, an association relationship between the target data and the input data may be determined based on the second information, to obtain the input data of the target model. Finally, inference is performed on the target model based on the input data of the target model, to obtain a corresponding inference result. That is, in some embodiments, after the first device determines input data of the target model based on the second information and the target data, the method further includes:
inputting, by the first device, the input data into the target model for inference, to obtain an inference result; and
sending, by the first device, the inference result to the second device.

It needs to be noted that, the foregoing AI characteristic may be understood as or replaced with an AI use case. An AI model is a model for implementing the AI characteristic or the AI use case.

In this embodiment of this application, a first device obtains first information and second information, where the first information is for determining target data for target model inference, and the second information is for indicating a mapping relationship between the target data for the target model inference and an input of a target model; the first device performs data acquisition based on the first information, to obtain the target data; and the first device determines input data of the target model based on the second information and the target data. In this way, because the terminal determines the input data of the target model based on the mapping relationship between the target data for the target model inference and the input of the target model, flexibility in selecting input data of an AI model can be improved, thereby better obtaining effective information of a communication network, and improving a capability of optimizing the communication network by the AI model.

Optionally, in some embodiments, the first information includes at least one of measurement resource information, measurement time, and a measurement quantity, where
the measurement resource information includes a measurement resource indication and an order of measurement resource.

Optionally, in some embodiments, the first information further includes an inference delay of the target model and a feedback time gap of an inference result of the target model.

Optionally, the foregoing measurement resource indication may include at least one of the following: a universal set of a measurement set, a subset of the measurement set, or a quantity of measurement resources of the measurement set.

In this embodiment of this application, after model inference is performed, the first device may feed back a model inference result based on the foregoing feedback time gap.

Optionally, data content included in the foregoing target data may be set based on an actual requirement. For example, in some embodiments, the target data includes a measured result of the measurement quantity of the measurement resource, or the target data includes a measured result of the measurement quantity of the measurement resource and identification information of the measurement resource.

Optionally, in some embodiments, the second information includes a first mapping relationship between the target data and a dataset, and a second mapping relationship between the dataset and a model input, and that the first device determines input data of the target model based on the second information and the target data includes:
generating, by the first device, a first dataset based on the target data and the first mapping relationship;
determining, by the first device, a second dataset based on the first dataset and a valid measurement time window associated with the target model; and
determining, by the first device, the input data of the target model based on the second dataset and the second mapping relationship.

In this embodiment of this application, the foregoing first dataset may include the target data, element identifier, and a time interval between the measurement time and current time. Optionally, the first device may obtain a corresponding element from the first dataset based on the valid measurement time window associated with the target model, to obtain the second dataset, or may delete an element from the first dataset based on the valid measurement time window associated with the target model, to obtain the second dataset.

It needs to be noted that, in this embodiment of this application, the foregoing first mapping relationship may be specifically understood as a mapping relationship between the target data and the first dataset, and the foregoing second mapping relationship may be specifically understood as a mapping relationship between the foregoing second dataset and a model input of the target model.

Optionally, the foregoing valid measurement time window is for determining effective measurement data in the first dataset. For example, it is assumed that a time measurement period is 40 ms, the current time is that t=k+2 (where 2 represents that 2x40 ms=80 ms, k represents 40*N ms, and N is a natural number), and the valid measurement time window is 45 ms. In this case, the first dataset may include target data obtained by measuring at a moment k, target data obtained by measuring at moment k+1, and target data obtained by measuring at moment k+2. The target data obtained by measuring at the moment k+1 and the target data obtained by measuring at the moment k+2 may be understood as the effective measurement data. In this case, the obtained second dataset includes the target data obtained by measuring at the moment k+1 and the target data obtained by measuring at the moment k+2.

It should be understood that, in this embodiment of this application, the second dataset may be directly used as the input data of the target model, or data in the second dataset may be preprocessed, to obtain the input data of the target model. For example, in some embodiments, the second mapping relationship includes any one of the following:
a mapping relationship between each element in the dataset and a model input identifier of the target model;
a mapping relationship between each element in the dataset and a model input identifier of the target model, and a preprocessing indication of the element in the dataset; and
a mapping relationship between each element in the dataset and a model input identifier, and an implicit mapping method, where the implicit mapping method is for indicating that the model input identifier is determined based on target information in the dataset.

In this embodiment of this application, the foregoing dataset may be understood as the foregoing first dataset or the foregoing second dataset. For example, when element identifiers in the first dataset and the second dataset are the same, the first dataset may be equivalent to the second dataset. When the foregoing dataset is understood as the second dataset, the foregoing second mapping relationship may include any one of the following:
a mapping relationship between each element in the second dataset and a model input identifier of the target model;
a mapping relationship between each element in the second dataset and the model input identifier of the target model, and a preprocessing indication of the element in the second dataset; and
a mapping relationship between each element in the second dataset and the model input identifier, and an implicit mapping method, where the implicit mapping method is for indicating that the model input identifier is determined based on target information in the second dataset.

In this embodiment of this application, when the second mapping relationship includes the mapping relationship between each element in the dataset and the model input identifier of the target model, it may be understood as that, an element in the dataset is directly mapped to the input data of the target model.

When the second mapping relationship includes the mapping relationship between each element in the dataset and a model input identifier of the target model, and the preprocessing indication of the element in the dataset, it may be understood as that, after corresponding preprocessing is performed on the element in the dataset, the element is mapped to the input data of the target model.

When the second mapping relationship includes the mapping relationship between each element in the dataset and the model input identifier, and the implicit mapping method, where the implicit mapping method is for indicating that the model input identifier is determined based on the target information in the dataset, it may be understood as that, the model input has a default value (which may be alternatively understood as a preset value of the model input), and the model input identifier input with a new value is determined by the target information. For example, the foregoing input data of the target model is obtained by means of tabulation. In this case, preprocessing may be further performed on each element in the dataset. Optionally, the default value may be specified in a protocol or indicated by the network side device. For example, the foregoing second information further includes the default value or indication information of the default value.

Optionally, in some embodiments, that the first device determines input data of the target model based on the second information and the target data includes:
determining, by the first device, the input data of the target model based on the second information, target reference time, and the target data, where
the target reference time is for representing reference time for the target model inference. The target reference time may be indicated by the second device. For example, when the terminal is used as an inference device, the target reference time may be included in the first information, or carried in an independent message, for example, carried in a radio resource control (Radio Resource Control, RRC) message, a medium access control control element (Medium Access Control Control Element, MAC CE), downlink control information (Downlink Control Information, DCI), or a newly defined AI message.

In this embodiment of this application, a corresponding dataset does not need to be predetermined, and the input data of the target model is directly determined in the target data based on the second information and the target reference time.

For example, it is assumed that the target reference time is that t=k+2, a time measurement period is 40 ms, and the valid measurement time window is 45 ms. In addition, it is assumed that currently obtained target data may include target data obtained by measurement at a moment k, target data obtained by measurement at a moment k+1, and target data obtained by measurement at a moment k+2, where the target data obtained by measurement at the moment k+1 and the target data obtained by measurement at the moment k+2 may be understood as the valid measurement data. In this case, the input data of the target model may be determined based on the target data obtained by measurement at the moment k+1 and the target data obtained by measurement at the moment k+2.

It should be understood that, in this embodiment of this application, the second information includes any one of the following:
a mapping relationship between the target data and a model input identifier of the target model;
a mapping relationship between the target data and the model input identifier of the target model, and a preprocessing indication of the target data; and
a mapping relationship between the target data and the model input identifier, and an implicit mapping method, where the implicit mapping method is for indicating that the model input identifier is determined based on target information in the target data.

In this embodiment of this application, when the second information includes the mapping relationship between the target data and the model input identifier of the target model, it may be understood as that, the target data is directly mapped to the input data of the target model.

When the second information includes the mapping relationship between the target data and the model input identifier of the target model, and the preprocessing indication of the target data, it may be understood as that, the target data is mapped to the input data of the target model after corresponding preprocessing is performed.

When the second information includes the mapping relationship between the target data and the model input identifier, and the implicit mapping method, where the implicit mapping method is for indicating that the model input identifier is determined based on target information in the target data, it may be understood as that, the model input has a default value (which may be understood as a preset value of the model input), and the model input identifier to which a new value is input is determined by the target information. For example, the foregoing input data of the target model is obtained by means of tabulation. In this case, preprocessing may be further performed on the target data.

Optionally, in some embodiments, the first information further includes a virtual identifier, and the target information includes at least one of identification information of a measurement resource, measurement time, and the virtual identifier.

In this embodiment of this application, the foregoing virtual identifier is associated with at least one of the identification information of the measurement resource and the measurement time. For example, in some embodiments, the virtual identifier is an identifier corresponding to an interval between the measurement time and the current time.

Optionally, in some embodiments, the preprocessing indication includes at least one of the following: a standardization indicator, a normalization indicator, an eigenvalue decomposition indicator, a differential privacy indicator, and a one-hot encoding indicator.

Optionally, in some embodiments, that a first device obtains first information and second information includes:
receiving, by the first device, the first information and the second information from the network side device.

In this embodiment of this application, because the second device indicates the first information and the second information to the first device, it may be determined that, the input data is more suitable for a current network environment, thereby further improving reliability of the model inference.

To better understand this application, the following is described below by using some instances.

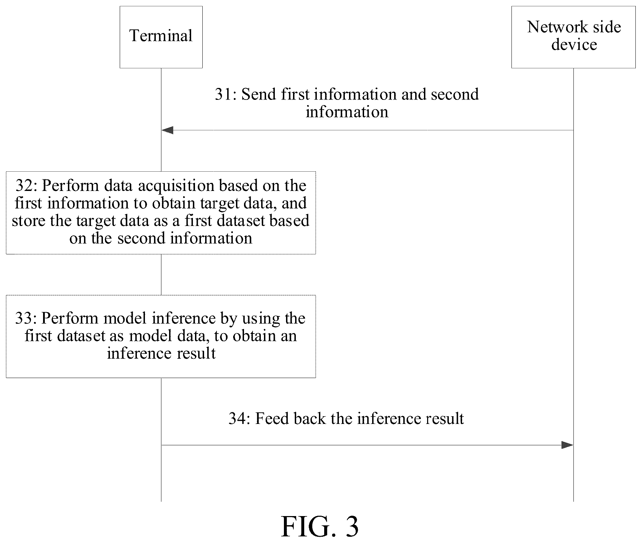

In some embodiments, the terminal may obtain the target data based on the first information, and then obtain the input data of the target model based on the second information. As shown in FIG. 3, the following process is included:
31: A network side device sends first information and second information to a terminal.
32: The terminal performs data acquisition based on the first information to obtain target data, and then stores the target data as a model input dataset, i.e., a set of input data of a target model based on the second information.
33: The terminal inputs the model input dataset into the target model, to perform model inference, and obtain an inference result.
34: The terminal feeds back the inference result to the network side device.

Optionally, the first information is for determining the target data for target model inference. For example, the first information includes measurement resource information, measurement time, and a measurement quantity. The second information is for indicating a mapping relationship between the target data for the target model inference and an input of the target model.

Optionally, the first information may further include an inference delay of the target model and a feedback time gap of the inference result of the target model.

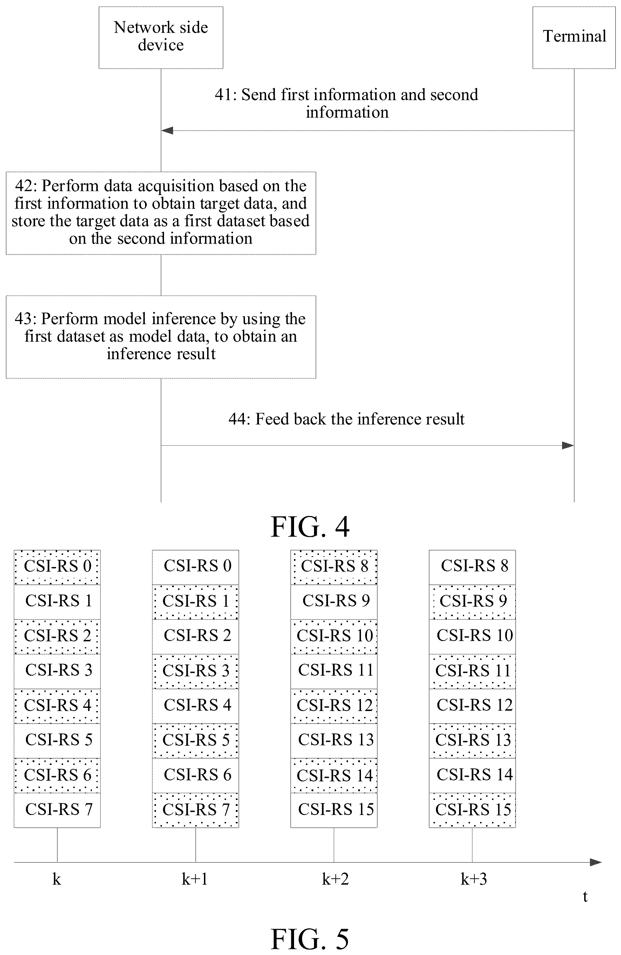

In some embodiments, the network side device may obtain the target data based on the first information, and then obtain the input data of the target model based on the second information. As shown in FIG. 4, the following process is included:
41: A terminal sends first information and second information to a network side device.
42: The network side device performs data acquisition based on the first information to obtain target data, and then stores the target data as a model input dataset, i.e., a set of input data of a target model based on the second information.
43: The network side device inputs the model input dataset into the target model, to perform model inference, and obtain an inference result.
44: The network side device feeds back the inference result to the terminal.

Optionally, the first information is for determining the target data for target model inference. For example, the first information includes measurement resource information, measurement time, and a measurement quantity. The second information is for indicating a mapping relationship between the target data for the target model inference and an input of the target model.

Optionally, the first information may further include an inference delay of the target model and a feedback time gap of the inference result of the target model.

Optionally, in some embodiments, the terminal may perform data acquisition based on the first information and then performs data storage.

It is assumed that the terminal performs resource measurement based on a resource measurement sequence shown in FIG. 5, and obtains a corresponding measured result. A measured result obtained by performing the resource measurement at time k includes layer1-reference signal receiving power 0 (Layer1-Reference Signal Receiving Power 0, L1-RSRP0), L1-RSRP 2, L1-RSRP 4, and L1-RSRP 6. A measured result obtained by performing the resource measurement at time k+1 includes L1-RSRP 1, L1-RSRP 3, L1-RSRP 5, and L1-RSRP 7. A measured result obtained by performing the resource measurement at time k+2 includes L1-RSRP 8, L1-RSRP 10, L1-RSRP 12, and L1-RSRP 14. A measured result obtained by performing the resource measurement at time k+3 includes L1-RSRP 9, L1-RSRP 11, L1-RSRP 13, and L1-RSRP 15.

Optionally, in some embodiments, multi-dimension storage may be performed on data. It is assumed that current time is that t=k+2, a time measurement period is 40 ms, and a valid measurement time window is 45 ms, an obtained second dataset is shown in Table 1.

**Table 1:**

| Element identifier | Time interval from current time | Resource identifier of measurement resource | Measurement quantity value |
|---|---|---|---|
| 1 | 0 | 8 | L1-RSRP 8 |
| 2 | 0 | 10 | L1-RSRP 10 |
| 3 | 0 | 12 | L1-RSRP 12 |
| 4 | 0 | 14 | L1-RSRP 14 |
| 5 | 40 ms | 1 | L1-RSRP 1 |
| 6 | 40 ms | 3 | L1-RSRP 3 |
| 7 | 40 ms | 5 | L1-RSRP 5 |
| 8 | 40 ms | 7 | L1-RSRP 7 |

Optionally, it is assumed that the current time is that t=k+3, a time measurement period is 40 ms, and the valid measurement time window is 45 ms, an obtained second dataset is shown in Table 2.

**Table 2:**

| Element identifier | Time interval from current time | Resource identifier of measurement resource | Measurement quantity value |
|---|---|---|---|
| 1 | 0 | 9 | L1-RSRP 9 |
| 2 | 0 | 11 | L1-RSRP 11 |
| 3 | 0 | 13 | L1-RSRP 13 |
| 4 | 0 | 15 | L1-RSRP 15 |
| 5 | 40 ms | 8 | L1-RSRP 8 |
| 6 | 40 ms | 10 | L1-RSRP 10 |
| 7 | 40 ms | 12 | L1-RSRP 12 |
| 8 | 40 ms | 4 | L1-RSRP 14 |

It needs to be noted that, in this embodiment of this application, the terminal may perform the following process:
The terminal performs data acquisition (specifically including performing measurement at a configured measurement resource and measurement time) based on the first information, to obtain the measured result corresponding to the measurement quantity, and generates a first dataset based on a first mapping relationship in the second information; and
the terminal deletes the element of the first dataset based on the valid measurement time window of the target model, to obtain the second dataset.

Optionally, the terminal may adjust element identifiers in the dataset based on the measurement time and the measurement sequence.

Optionally, in some embodiments, one-dimension storage may be performed on the data. It is assumed that the current time is that t=k+2, a time measurement period is 40 ms, and the valid measurement time window is 45 ms, a parameter (for example, the resource identifier of the measurement resource) related to the measurement quantity indicated by the first information is used as an input of the model. In this case, an obtained second dataset is shown in Table 3.

**Table 3:**

| Element identifier | Time interval from current time | Parameter associated with a measurement value/a measurement quantity |
|---|---|---|
| 1 | 0 | L1-RSRP 8 |
| 2 | 0 | L1-RSRP 10 |
| 3 | 0 | L1-RSRP 12 |
| 4 | 0 | L1-RSRP 14 |
| 5 | 40 ms | L1-RSRP 1 |
| 6 | 40 ms | L1-RSRP 3 |
| 7 | 40 ms | L1-RSRP 5 |
| 8 | 40 ms | L1-RSRP 7 |
| 9 | 0 | 8 |
| 10 | 0 | 10 |
| 11 | 0 | 12 |
| 12 | 0 | 14 |
| 13 | 40 ms | 1 |
| 14 | 40 ms | 3 |
| 15 | 40 ms | 5 |
| 16 | 40 ms | 7 |

It needs to be noted that, in this embodiment of this application, the terminal may perform the following process:
The terminal performs data acquisition (specifically including performing measurement at a configured measurement resource and measurement time) based on the first information, to obtain the measured result corresponding to the measurement quantity;
the terminal generates the first dataset based on the measurement quantity, the parameter associated with the measurement quantity, and the first mapping relationship in the second information; and
the terminal deletes the element of the first dataset based on the valid measurement time window of the target model, to obtain the second dataset.

Optionally, in some embodiments, the terminal obtains the input data of the model based on the second dataset and a second mapping relationship in the second information.

Using Table 3 as an example, it is assumed that the current time is that t=k+2. In this case, corresponding input data is determined based on Table 4 below.

**Table 4:**

| Model input identifier | Time gap window | Corresponding relationship of the row in which a value in the second dataset is located | Corresponding value |
|---|---|---|---|
| 0 | 0 to 5 ms | 1 | First measured L1-RSRP, i.e., L1-RSRP 8 |
| 1 | 0 to 5 ms | 2 | Second measured L1-RSRP, i.e., L1-RSRP 10 |
| 2 | 0 to 5 ms | 3 | Third measured L1-RSRP, i.e., L1-RSRP 12 |
| 3 | 0 to 5 ms | 4 | Fourth measured L1-RSRP, i.e., L1-RSRP 14 |
| 4 | 40 to 45 ms | 5 | First measured L1-RSRP, i.e., L1-RSRP 1 |
| 5 | 40 to 45 ms | 6 | Second measured L1-RSRP, i.e., L1-RSRP 3 |
| 6 | 40 to 45 ms | 7 | Third measured L1-RSRP, i.e., L1-RSRP 5 |
| 7 | 40 to 45 ms | 8 | Fourth measured L1-RSRP, i.e., L1-RSRP 7 |
| 8 | 0 to 5 ms | 9 | Identifier of the measurement resource, i.e., 8 |
| 9 | 0 to 5 ms | 10 | Identifier of the measurement resource, i.e., 10 |
| 10 | 0 to 5 ms | 11 | Identifier of the measurement resource, i.e., 12 |
| 11 | 0 to 5 ms | 12 | Identifier of the measurement resource, i.e., 14 |
| 12 | 40 to 45 ms | 13 | Identifier of the measurement resource, i.e., 1 |
| 13 | 40 to 45 ms | 14 | Identifier of the measurement resource, i.e., 3 |
| 14 | 40 to 45 ms | 15 | Identifier of the measurement resource, i.e., 5 |
| 15 | 40 to 45 ms | 16 | Identifier of the measurement resource, i.e., 7 |

Using Table 2 as an example, it is assumed that the current time is that t=k+2. In this case, corresponding input data is determined based on Table 5 below.

**Table 5:**

| Model input identifier | Time interval window | Index of the second dataset (column, row) | Corresponding value |
|---|---|---|---|
| 0 | 0 to 5 ms | (2, 1) | First measured L1-RSRP, i.e., L1-RSRP 9 |
| 1 | 0 to 5 ms | (2, 2) | Second measured L1-RSRP, i.e., L1-RSRP 11 |
| 2 | 0 to 5 ms | (2, 3) | Third measured L1-RSRP, i.e., L1-RSRP 13 |
| 3 | 0 to 5 ms | (2, 4) | Fourth measured L1-RSRP, i.e., L1-RSRP 15 |
| 4 | 40 to 45 ms | (2, 5) | First measured L1-RSRP, i.e., L1-RSRP 8 |
| 5 | 40 to 45 ms | (2, 6) | Second measured L1-RSRP, i.e., L1-RSRP 10 |
| 6 | 40 to 45 ms | (2, 7) | Third measured L1-RSRP, i.e., L1-RSRP 12 |
| 7 | 40 to 45 ms | (2, 8) | Fourth measured L1-RSRP, i.e., L1-RSRP 14 |
| 8 | 0 to 5 ms | (1, 1) | Identifier of the measurement resource, i.e., 9 |
| 9 | 0 to 5 ms | (1, 2) | Identifier of the measurement resource, i.e., 11 |
| 10 | 0 to 5 ms | (1, 3) | Identifier of the measurement resource, i.e., 13 |
| 11 | 0 to 5 ms | (1, 4) | Identifier of the measurement resource, i.e., 15 |
| 12 | 40 to 45 ms | (1, 5) | Identifier of the measurement resource, i.e., 8 |
| 13 | 40 to 45 ms | (1, 6) | Identifier of the measurement resource, i.e., 10 |
| 14 | 40 to 45 ms | (1, 7) | Identifier of the measurement resource, i.e., 12 |
| 15 | 40 to 45 ms | (1, 8) | Identifier of the measurement resource, i.e., 14 |

The index (2, 1) indicates data located in a first row and a second column of effective data in the second dataset, i.e., L1-RSRP 9. In Table 1 and Table 2, the second dataset includes two columns of the effective data, for example, the resource identifier of the measurement resource and the measurement quantity value.

The effective data in Table 2 is as shown in the following table:

| Resource identifier of measurement resource | Measurement quantity value |
|---|---|
| 9 | L1-RSRP 9 |
| 11 | L1-RSRP 11 |
| 13 | L1-RSRP 13 |
| 15 | L1-RSRP 15 |
| 8 | L1-RSRP 8 |
| 10 | L1-RSRP 10 |
| 12 | L1-RSRP 12 |
| 4 | L1-RSRP 14 |

It needs to be noted that, in this embodiment of this application, the foregoing second mapping relationship in the second information includes a mapping relationship between each element in the second dataset and the model input identifier of the target model, or the second mapping relationship includes a correspondence between each AI unit input (that is, an input of one dimension corresponding to each model input identifier of the model) and the element in the second dataset. Specifically, the corresponding relationship may include:
an association relationship between each AI unit input and each element in the column in which the effective value of the first dataset is located; or
an association relationship among the column in which the effective value as the model input in the second dataset is located, the effective value and the model input identifier.

It should be understood that, the second dataset needs to include time-related information, for updating the dataset. However, the time information does not need to be directly input as the model. Therefore, it is not an effective value.

Optionally, in some embodiments, the terminal obtains the input data of the model based on the second dataset and the second mapping relationship in the second information, including according to a preprocessing solution.

In this embodiment of this application, the foregoing second information includes the second mapping relationship, i.e., the mapping relationship between each element in the second dataset and the model input identifier of the target model, and a preprocessing indication and a preprocessed object indication of the element in the second dataset.

Optionally, the preprocessing indication may include at least one of the following: a standardization indicator, a normalization indicator, an eigenvalue decomposition indicator, a differential privacy indicator, and a one-hot encoding indicator.

It is assumed that a preprocessed object is a measurement resource identifier, the preprocessing indication is the one-hot code indicator, and a length of the one-hot code indicator is 16. Using Table 1 as an example, it is assumed that the current time is that t=k+2. In this case, corresponding input data is shown as preprocessed values in Table 6 below.

**Table 6:**

| Model input identifier | Time interval window | Identifier of the row in which a value in the second dataset is located | Corresponding value in the second dataset | Preprocessed value |
|---|---|---|---|---|
| 0 | 0 to 5 ms | 1 | L1-RSRP 8 | L1-RSRP 8 |
| 1 | 0 to 5 ms | 2 | L1-RSRP 10 | L1-RSRP 10 |
| 2 | 0 to 5 ms | 3 | L1-RSRP 12 | L1-RSRP 12 |
| 3 | 0 to 5 ms | 4 | L1-RSRP 14 | L1-RSRP 14 |
| 4 | 40 to 45 ms | 5 | L1-RSRP 1 | L1-RSRP 1 |
| 5 | 40 to 45 ms | 6 | L1-RSRP 3 | L1-RSRP 3 |
| 6 | 40 to 45 ms | 7 | L1-RSRP 5 | L1-RSRP 5 |
| 7 | 40 to 45 ms | 8 | L1-RSRP 7 | L1-RSRP 7 |
| 8 to 23 | 0 to 5 ms | 9 | 8 | 0000000010000000 |
| 24 to 39 | 0 to 5 ms | 10 | 10 | 0000000000100000 |
| 40 to 55 | 0 to 5 ms | 11 | 12 | 0000000000001000 |
| 56 to 71 | 0 to 5 ms | 12 | 14 | 0000000000000010 |
| 72 to 87 | 40 to 45 ms | 13 | 1 | 0100000000000000 |
| 88 to 93 | 40 to 45 ms | 14 | 3 | 0001000000000000 |
| 94 to 111 | 40 to 45 ms | 15 | 5 | 0000010000000000 |
| 112 to 127 | 40 to 45 ms | 16 | 7 | 0000000100000000 |

Optionally, in some embodiments, the terminal obtains the input data of the model based on the second dataset and the second information, including according to a solution of tabulation.

In this embodiment of this application, the foregoing second information includes the second mapping relationship, i.e., a mapping relationship between each element in the second dataset and the model input identifier, and an implicit mapping method. The implicit mapping method is for indicating that the model input identifier is determined based on target information in the second dataset. Further, the foregoing second information further includes a default value (that is, a preset value of the model input), which is, for example, 0.

It is assumed that the model input identifier is determined based on the resource identifier of the measurement resource and a time interval between the measurement time and target reference time.

Using Table 1 as an example, it is assumed that the current time is that t=k+2. In this case, corresponding input data is shown as preprocessed values in Table 7 below.

**Table 7:**

| Model input identifier | Time interval window | Identifier of the row in which a value in the second dataset is located | Resource identifier in the second dataset | Corresponding value in the second dataset |
|---|---|---|---|---|
| (0, 8) | 0 to 5 ms | 1 | 8 | L1-RSRP 8 |
| (0, 10) | 0 to 5 ms | 2 | 10 | L1-RSRP 10 |
| (0, 12) | 0 to 5 ms | 3 | 12 | L1-RSRP 12 |
| (0, 14) | 0 to 5 ms | 4 | 14 | L1-RSRP 14 |
| (1, 1) | 40 to 45 ms | 5 | 1 | L1-RSRP 1 |
| (1, 3) | 40 to 45 ms | 6 | 3 | L1-RSRP 3 |
| (1, 5) | 40 to 45 ms | 7 | 5 | L1-RSRP 5 |
| (1, 7) | 40 to 45 ms | 8 | 7 | L1-RSRP 7 |

0 in the model input identifier (0, 8) is an identifier in a first dimension and represents a virtual identifier corresponding to an interval between the measurement time and the current time, and 8 is an identifier in a second dimension and is determined based on the resource identifier of the measurement resource. It is assumed that the default value is 0. In this case, a final model input is as shown in the following table:

| | |
|---|---|
| 0 | 0 |
| 0 | L1-RSRP 1 |
| 0 | 0 |
| 0 | L1-RSRP 3 |
| 0 | 0 |
| 0 | L1-RSRP 5 |
| 0 | 0 |
| 0 | L1-RSRP 7 |
| L1-RSRP 8 | 0 |
| 0 | 0 |
| L1-RSRP 10 | 0 |
| 0 | 0 |
| L1-RSRP 12 | 0 |
| 0 | 0 |
| L1-RSRP 14 | 0 |
| 0 | 0 |

Optionally, in some embodiments, the input of the model may be obtained based on the second information and the target data.

It is assumed that the target reference time is that t=k+2, and the second information includes the mapping relationship between the target data and the model input identifier of the target model. In this case, the input data of the target model is shown in Table 8.

**Table 8:**

| Model input identifier | Time interval from target reference time | Input value (which is data acquired based on first information) |
|---|---|---|
| 0 | 0 to 5 ms | Beam quality of a first measurement resource, i.e., L1-RSRP 8 |
| 1 | 0 to 5 ms | Beam quality of a second measurement resource, i.e., L1-RSRP 10 |
| 2 | 0 to 5 ms | Beam quality of a third measurement resource, i.e., L1-RSRP 12 |
| 3 | 0 to 5 ms | Beam quality of a fourth measurement resource, i.e., L1-RSRP 14 |
| 4 | 40 to 45 ms | Beam quality of the first measurement resource, i.e., L1-RSRP 1 |
| 5 | 40 to 45 ms | Beam quality of the second measurement resource, i.e., L1-RSRP 3 |
| 6 | 40 to 45 ms | Beam quality of the third measurement resource, i.e., L1-RSRP 5 |
| 7 | 40 to 45 ms | Beam quality of the fourth measurement resource, i.e., L1-RSRP 7 |
| 8 | 0 to 5 ms | Resource identifier of the first measurement resource, i.e., 8 |
| 9 | 0 to 5 ms | Resource identifier of the second measurement resource, i.e., 10 |
| 10 | 0 to 5 ms | Resource identifier of the third measurement resource, i.e., 12 |
| 11 | 0 to 5 ms | Resource identifier of the fourth measurement resource, i.e., 14 |
| 12 | 40 to 45 ms | Resource identifier of the first measurement resource, i.e., 1 |
| 13 | 40 to 45 ms | Resource identifier of the second measurement resource, i.e., 3 |
| 14 | 40 to 45 ms | Resource identifier of the third measurement resource, i.e., 5 |
| 15 | 40 to 45 ms | Resource identifier of the fourth measurement resource, i.e., 7 |

In this embodiment of this application, the input data of the target model may be determined based on the first information, the second information, and the target reference time. Specifically, the following process may be included: The terminal performs data acquisition based on the first information; and then, determines the input data of the target model based on the second information and the target reference time.

Optionally, the foregoing target reference time may be sent to the terminal by a network side device.

Optionally, when the terminal is used as an inference device, the target reference time may be included in the first information, or may be carried in an independent message, for example, carried in a RRC message, an MAC CE, a DCI, or a newly-defined AI message.

Optionally, in some embodiments, the terminal obtains the input data of the model based on the target data and the second information, including according to the preprocessing solution.

In this embodiment of this application, it is assumed that the second information further includes the preprocessing indication. A preprocessed object is the measurement resource identifier, the processing indication is the one-hot code indicator, and a length of the one-hot code indicator is 16. It is assumed that the current time is that t=k+2. In this case, corresponding input data is shown as preprocessed values in Table 9 below.

**Table 9:**

| Model input identifier | Time interval from target reference time | Input value (which is data acquired based on first information) |
|---|---|---|
| 0 | 0 to 5 ms | Beam quality of a first measurement resource, i.e., L1-RSRP 8 |
| 1 | 0 to 5 ms | Beam quality of a second measurement resource, i.e., L1-RSRP 10 |
| 2 | 0 to 5 ms | Beam quality of a third measurement resource, i.e., L1-RSRP 12 |
| 3 | 0 to 5 ms | Beam quality of a fourth measurement resource, i.e., L1-RSRP 14 |
| 4 | 40 to 45 ms | Beam quality of the first measurement resource, i.e., L1-RSRP 1 |
| 5 | 40 to 45 ms | Beam quality of the second measurement resource, i.e., L1-RSRP 3 |
| 6 | 40 to 45 ms | Beam quality of the third measurement resource, i.e., L1-RSRP 5 |
| 7 | 40 to 45 ms | Beam quality of the fourth measurement resource, i.e., L1-RSRP 7 |
| 8 to 23 | 0 to 5 ms | Resource identifier of the first measurement resource, i.e., 8 (which is further converted into a one-hot code of 0000000010000000) |
| 24 to 39 | 0 to 5 ms | Resource identifier of the second measurement resource, i.e., 10 (which is further converted into a one-hot code of 0000000000100000) |
| 40 to 55 | 0 to 5 ms | Resource identifier of the third measurement resource, i.e., 12 (which is further converted into a one-hot code of 0000000000001000) |
| 56 to 71 | 0 to 5 ms | Resource identifier of the fourth measurement resource, i.e., 14 (which is further converted into a one-hot code of 00000000000000 10) |
| 72 to 87 | 40 to 45 ms | Resource identifier of the first measurement resource, i.e., 1 (which is further converted into a one-hot code of 0100000000000000) |
| 88 to 93 | 40 to 45 ms | Resource identifier of the second measurement resource, i.e., 3 (which is further converted into a one-hot code of 0001000000000000) |
| 94 to 111 | 40 to 45 ms | Resource identifier of the third measurement resource, i.e., 5 (which is further converted into a one-hot code of 0000010000000000) |
| 112 to 127 | 40 to 45 ms | Resource identifier of the fourth measurement resource, i.e., 7 (which is further converted into a one-hot code of 0000000100000000) |

In this embodiment of this application, the terminal may perform data acquisition based on the first information; and then, determines the input data of the target model based on the second information and the target reference time.

Optionally, the foregoing target reference time may be sent to the terminal by the network side device.

Optionally, when the terminal is used as the inference device, the target reference time may be included in the first information, or may be carried in an independent message, for example, carried in the RRC message, the MAC CE, the DCI, or the newly-defined AI message.

Optionally, in some embodiments, the terminal obtains the input data of the model based on the target data and the second information, including according to the solution of tabulation.

In this embodiment of this application, the foregoing second information includes a mapping relationship between the target data and the model input identifier, and an implicit mapping method, where the implicit mapping method is for indicating that the model input identifier is determined based on target information in the target data.

It is assumed that the model input identifier is determined based on the resource identifier of the measurement resource and the time interval between the measurement time and the target reference time, and the current time is that t=k+2. In this case, corresponding input data is as shown in Table 10 below.

**Table 10:**

| Model input identifier | Time interval from target reference time | Input value (which is data acquired based on first information) |
|---|---|---|
| (0, 8) | 0 to 5 ms | Beam quality of a first measurement resource, i.e., L1-RSRP 8 |
| (0, 10) | 0 to 5 ms | Beam quality of a second measurement resource, i.e., L1-RSRP 10 |
| (0, 12) | 0 to 5 ms | Beam quality of a third measurement resource, i.e., L1-RSRP 12 |
| (0, 14) | 0 to 5 ms | Beam quality of a fourth measurement resource, i.e., L1-RSRP 14 |
| (1, 1) | 40 to 45 ms | Beam quality of the first measurement resource, i.e., L1-RSRP 1 |
| (1, 3) | 40 to 45 ms | Beam quality of the second measurement resource, i.e., L1-RSRP 3 |
| (1, 5) | 40 to 45 ms | Beam quality of the third measurement resource, i.e., L1-RSRP 5 |
| (1, 7) | 40 to 45 ms | Beam quality of the fourth measurement resource, i.e., L1-RSRP 7 |

0 in the model input identifier (0, 8) is an identifier in the first dimension and represents a virtual identifier corresponding to an interval between the measurement time and the target reference time, and 8 is an identifier in the second dimension and is determined based on the resource identifier of the measurement resource.

It is assumed that the default value is 0. In this case, a final model input is as shown in the following table:

| | |
|---|---|
| 0 | 0 |
| 0 | L1-RSRP 1 |
| 0 | 0 |
| 0 | L1-RSRP 3 |
| 0 | 0 |
| 0 | L1-RSRP 5 |
| 0 | 0 |
| 0 | L1-RSRP 7 |
| L1-RSRP 8 | 0 |
| 0 | 0 |
| L1-RSRP 10 | 0 |
| 0 | 0 |
| L1-RSRP 12 | 0 |
| 0 | 0 |
| L1-RSRP 14 | 0 |
| 0 | 0 |

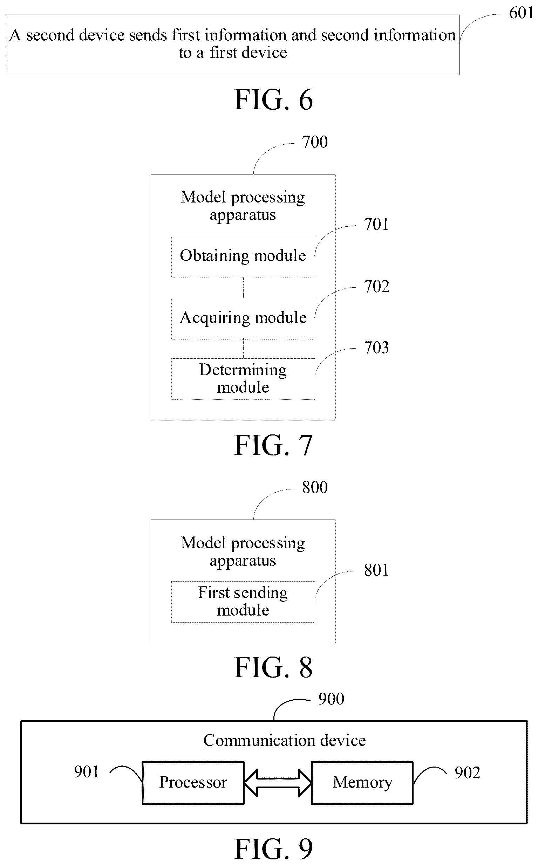

Referring to FIG. 6, an embodiment of this application further provides a model processing method. As shown in FIG. 6, the model processing method includes the following steps:
Step 601: A second device sends first information and second information to a first device, where
the first information is for determining target data for target model inference, and the second information is for indicating a mapping relationship between the target data for the target model inference and an input of a target model.

Optionally, the first information includes at least one of measurement resource information, measurement time, and a measurement quantity, where
the measurement resource information includes a measurement resource indication and an order of measurement resource.

Optionally, the first information further includes an inference delay of the target model and a feedback time gap of an inference result of the target model.

Optionally, the target data includes a measured result of the measurement quantity of the measurement resource, or the target data includes a measured result of the measurement quantity of the measurement resource and identification information of the measurement resource.

Optionally, the second information includes a first mapping relationship between the target data and a dataset, and a second mapping relationship between the dataset and a model input, and the second mapping relationship includes any one of the following:
a mapping relationship between each element in the dataset and a model input identifier of the target model;
a mapping relationship between each element in the dataset and a model input identifier of the target model, and a preprocessing indication of the element in the dataset; and
a mapping relationship between each element in the dataset and a model input identifier, and an implicit mapping method, where the implicit mapping method is for indicating that the model input identifier is determined based on target information in the dataset.

Optionally, the second information includes any one of the following:
a mapping relationship between the target data and a model input identifier of the target model;
a mapping relationship between the target data and the model input identifier of the target model, and a preprocessing indication of the target data; and
a mapping relationship between the target data and the model input identifier, and an implicit mapping method, where the implicit mapping method is for indicating that the model input identifier is determined based on target information in the target data.

Optionally, the first information further includes a virtual identifier, and the target information includes at least one of identification information of a measurement resource, measurement time, and the virtual identifier.

Optionally, the preprocessing indication includes at least one of the following: a standardization indicator, a normalization indicator, an eigenvalue decomposition indicator, a differential privacy indicator, and a one-hot encoding indicator.

The model processing method provided in the embodiments of this application may be executed by a model processing apparatus. In this embodiment of this application, the model processing apparatus provided in this embodiment of this application is described by using an example in which the model processing method is performed by the model processing apparatus.

Referring to FIG. 7, an embodiment of this application further provides a model processing apparatus. As shown in FIG. 7, the model processing apparatus 700 includes:
an obtaining module 701, configured to obtain first information and second information, where the first information is for determining target data for target model inference, and the second information is for indicating a mapping relationship between the target data for the target model inference and an input of a target model;
an acquiring module 702, configured to perform data acquisition based on the first information, to obtain the target data; and
a determining module 703, configured to determine input data of the target model based on the second information and the target data.

Optionally, the first information includes at least one of measurement resource information, measurement time, and a measurement quantity, where
the measurement resource information includes a measurement resource indication and an order of measurement resource.

Optionally, the first information further includes an inference delay of the target model and a feedback time gap of an inference result of the target model.

Optionally, the target data includes a measured result of the measurement quantity of the measurement resource, or the target data includes a measured result of the measurement quantity of the measurement resource and identification information of the measurement resource.

Optionally, the second information includes a first mapping relationship between the target data and a dataset, and a second mapping relationship between the dataset and a model input, and the determining module 703 is specifically configured to perform the following operation:
generating a first dataset based on the target data and the first mapping relationship;
determining a second dataset based on the first dataset and a valid measurement time window associated with the target model; and
determining the input data of the target model based on the second dataset and the second mapping relationship.

Optionally, the second mapping relationship includes any one of the following:
a mapping relationship between each element in the dataset and a model input identifier of the target model;
a mapping relationship between each element in the dataset and a model input identifier of the target model, and a preprocessing indication of the element in the dataset; and
a mapping relationship between each element in the dataset and a model input identifier, and an implicit mapping method, where the implicit mapping method is for indicating that the model input identifier is determined based on target information in the dataset.

Optionally, the determining module 703 is specifically configured to determine the input data of the target model based on the second information, target reference time, and the target data; where
the target reference time is for representing reference time for the target model inference.

Optionally, the second information includes any one of the following:
a mapping relationship between the target data and a model input identifier of the target model;
a mapping relationship between the target data and the model input identifier of the target model, and a preprocessing indication of the target data; and
a mapping relationship between the target data and the model input identifier, and an implicit mapping method, where the implicit mapping method is for indicating that the model input identifier is determined based on target information in the target data.

Optionally, the first information further includes an associated identifier, and the target information includes at least one of identification information of a measurement resource, measurement time, and the virtual identifier.

Optionally, the preprocessing indication includes at least one of the following: a standardization indicator, a normalization indicator, an eigenvalue decomposition indicator, a differential privacy indicator, and a one-hot encoding indicator.

Optionally, the obtaining module 701 is specifically configured to receive the first information and the second information from a network side device.

Optionally, the model processing apparatus 700 further includes:
an inference module, configured to input the input data into the target model for inference, to obtain an inference result; and
a second sending module, configured to send the inference result to the second device.

Referring to FIG. 8, an embodiment of this application further provides a model processing apparatus. As shown in FIG. 8, the model processing apparatus 800 includes:
a first sending module 801, configured to send first information and second information to a first device, where
the first information is for determining target data for target model inference, and the second information is for indicating a mapping relationship between the target data for the target model inference and an input of a target model.

Optionally, the first information includes at least one of measurement resource information, measurement time, and a measurement quantity, where
the measurement resource information includes a measurement resource indication and an order of measurement resource.

Optionally, the first information further includes an inference delay of the target model and a feedback time gap of an inference result of the target model.

Optionally, the target data includes a measured result of the measurement quantity of the measurement resource, or the target data includes a measured result of the measurement quantity of the measurement resource and identification information of the measurement resource.

Optionally, the second information includes a first mapping relationship between the target data and a dataset, and a second mapping relationship between the dataset and a model input, and the second mapping relationship includes any one of the following:
a mapping relationship between each element in the dataset and a model input identifier of the target model;
a mapping relationship between each element in the dataset and a model input identifier of the target model, and a preprocessing indication of the element in the dataset; and
a mapping relationship between each element in the dataset and a model input identifier, and an implicit mapping method, where the implicit mapping method is for indicating that the model input identifier is determined based on target information in the dataset.

Optionally, the second information includes any one of the following:
a mapping relationship between the target data and a model input identifier of the target model;
a mapping relationship between the target data and the model input identifier of the target model, and a preprocessing indication of the target data; and
a mapping relationship between the target data and the model input identifier, and an implicit mapping method, where the implicit mapping method is for indicating that the model input identifier is determined based on target information in the target data.

Optionally, the first information further includes a virtual identifier, and the target information includes at least one of identification information of a measurement resource, measurement time, and the virtual identifier.

Optionally, the preprocessing indication includes at least one of the following: a standardization indicator, a normalization indicator, an eigenvalue decomposition indicator, a differential privacy indicator, and a one-hot encoding indicator.

The model processing apparatus in this embodiment of this application may be an electronic device, for example, an electronic device having an operating system, or may be a component, for example, an integrated circuit or a chip, in the electronic device. The electronic device may be a terminal or may be another device except for the terminal. For example, the terminal may include, but is not limited to, the types of the terminal 11 listed above, and the another device may be a server, a network attached storage (Network Attached Storage, NAS), or the like. This is not specifically limited in the embodiments of this application.

The model processing apparatus provided in this embodiment of this application can implement the processes implemented in the method embodiments of FIG. 2 to FIG. 6, and the same technical effect is achieved. To avoid repetition, details are not described herein again.

As shown in FIG. 9, an embodiment of this application further provides a communication device 900. The communication device includes a processor 901 and a memory 902. The memory 902 stores a program or instructions executable on the processor 901. The program or the instructions, when executed by the processor 901, implement the steps of the embodiment of the foregoing model processing method, and the same technical effect can be achieved. Details are not described herein again to avoid repetition.

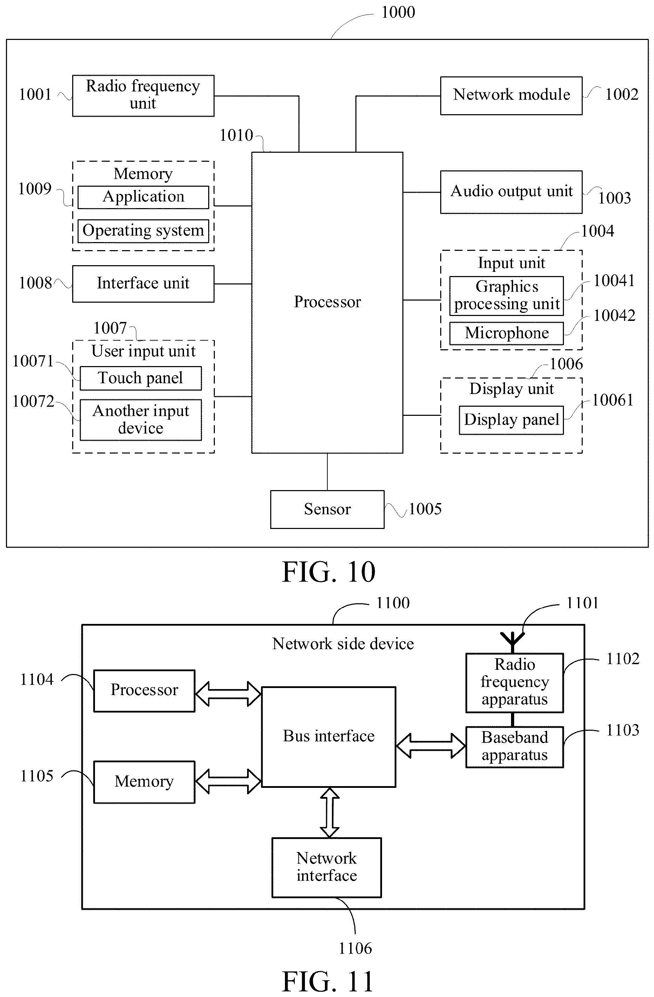

An embodiment of this application further provides a terminal. The terminal includes a processor and a communication interface. The communication interface is coupled to the processor, and the processor is configured to execute a program or instructions, to implement the steps of the method embodiments as shown in FIG. 2 to FIG. 6. The terminal embodiment corresponds to the foregoing method embodiments of a terminal side. Implementation processes and implementations of the foregoing method embodiments are all applicable to the terminal embodiment, and the same technical effect can be achieved. Specifically, FIG. 10 is a schematic diagram of a hardware structure of a terminal for implementing an embodiment of this application.

The terminal 1000 includes, but is not limited to, at least some components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

A person skilled in the art may understand that the terminal 1000 may further include a power supply (for example, a battery) that supplies power to each component. The power supply may be logically connected to the processor 1010 by using a power management system, to implement functions such as charging and discharging management and power consumption management by using the power management system. The terminal structure shown in FIG. 10 constitutes no limitation on the terminal, and the terminal may include more or fewer components than those shown in the figure, or combine some components, or have different component arrangements. Details are not described herein again.

It should be understood that in an embodiment of this application, the input unit 1004 may include a graphics processing unit (Graphics Processing Unit, GPU) 10041 and a microphone 10042. The graphics processing unit 10041 processes image data of static pictures or videos captured by an image capture apparatus (like a camera) in a video capture mode or an image capture mode. The display unit 1006 may include a display panel 10061, and the display panel 10061 may be configured in a form of a liquid crystal display, an organic light-emitting diode, or the like. The user input unit 1007 includes at least one of a touch panel 10071 and another input device 10072. The touch panel 10071 is also known as a touchscreen. The touch panel 10071 may include two parts, namely a touch detection apparatus and a touch controller. The another input device 10072 may include, but is not limited to, a physical keyboard, a function button (for example, a volume control button, or a power button), a trackball, a mouse, and a joystick. Details are not described herein again.

In this embodiment of this application, the radio frequency unit 1001 receives downlink data from a network side device and then transmits the data to the processor 1010 for processing. In addition, the radio frequency unit 1001 may send uplink data to the network side device. Generally, the radio frequency unit 1001 includes, but is not limited to, an antenna, an amplifier, a transceiver, a coupler, a low noise amplifier, and a duplexer.

The memory 1009 may be configured to store a software program or instructions and various types of data. The memory 1009 may mainly include a first storage area for storing the program and the instructions and a second storage area for storing the data. The first storage area may store an operating system, an application or instructions required by at least one function (for example, a sound playback function and an image display function), and the like. In addition, the memory 1009 may include a volatile memory or a non-volatile memory. The non-volatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM), or a flash memory. The volatile memory may be a random access memory (Random Access Memory, RAM), a static RAM Static RAM, SRAM), a dynamic RAM (Dynamic RAM, DRAM), a synchronous DRAM (Synchronous DRAM, SDRAM), a double data rate SDRAM (Double Data Rate SDRAM, DDRSDRAM), an enhanced SDRAM (Enhanced SDRAM, ESDRAM), a synch link DRAM (Synch Link DRAM, SLDRAM), and a direct rambus RAM (Direct Rambus RAM, DRRAM). The memory 1009 in this embodiment of this application includes, but is not limited to, the memories and any memory of another proper type.

The processor 1010 may include one or more processing units. Optionally, the processor 1010 integrates an application processor and a modem processor. The application processor mainly processes operations related to an operating system, a user interface, an application, and the like. The modem processor mainly processes wireless communication signals, and is, for example, a baseband processor. It may be understood that, the foregoing modulation and demodulation processor may alternatively not be integrated into the processor 1010, where
the radio frequency unit 1001 is configured to obtain first information and second information when the terminal is a first device, where the first information is for determining target data for target model inference, and the second information is for indicating a mapping relationship between the target data for the target model inference and an input of a target model; and perform data acquisition based on the first information, to obtain the target data; and
the processor 1010 is configured to determine input data of the target model based on the second information and the target data.

Optionally, the first information includes at least one of measurement resource information, measurement time, and a measurement quantity, where
the measurement resource information includes a measurement resource indication and an order of measurement resource.

Optionally, the first information further includes an inference delay of the target model and a feedback time gap of an inference result of the target model.

Optionally, the target data includes a measured result of the measurement quantity of the measurement resource, or the target data includes a measured result of the measurement quantity of the measurement resource and identification information of the measurement resource.

Optionally, the second information includes a first mapping relationship between the target data and a dataset, and a second mapping relationship between the dataset and a model input, and the processor 1010 is specifically configured to perform the following operation:
generating a first dataset based on the target data and the first mapping relationship;
determining a second dataset based on the first dataset and a valid measurement time window associated with the target model; and
determining the input data of the target model based on the second dataset and the second mapping relationship.

Optionally, the second information includes a first mapping relationship between the target data and a dataset, and a second mapping relationship between the dataset and a model input, and the second mapping relationship includes any one of the following:
a mapping relationship between each element in the dataset and a model input identifier of the target model;
a mapping relationship between each element in the dataset and a model input identifier of the target model, and a preprocessing indication of the element in the dataset; and
a mapping relationship between each element in the dataset and a model input identifier, and an implicit mapping method, where the implicit mapping method is for indicating that the model input identifier is determined based on target information in the dataset.

Optionally, the processor 1010 is specifically configured to determine the input data of the target model based on the second information, target reference time, and the target data; where
the target reference time is for representing reference time for the target model inference.

Optionally, the second information includes any one of the following:
a mapping relationship between the target data and a model input identifier of the target model;
a mapping relationship between the target data and the model input identifier of the target model, and a preprocessing indication of the target data; and
a mapping relationship between the target data and the model input identifier, and an implicit mapping method, where the implicit mapping method is for indicating that the model input identifier is determined based on target information in the target data.

Optionally, the first information further includes a virtual identifier, and the target information includes at least one of identification information of a measurement resource, measurement time, and the virtual identifier.

Optionally, the preprocessing indication includes at least one of the following: a standardization indicator, a normalization indicator, an eigenvalue decomposition indicator, a differential privacy indicator, and a one-hot encoding indicator.

Optionally, the radio frequency unit 1001 is specifically configured to receive the first information and the second information from the network side device.

Optionally, the processor 1010 is further configured to input the input data into the target model for inference, to obtain an inference result; and
the radio frequency unit 1001 is further configured to send the inference result to the second device.

The radio frequency unit 1001 is configured to send first information and second information to the first device when the terminal is the second device, where the first information is for determining target data for target model inference, and the second information is for indicating a mapping relationship between the target data for the target model inference and the input of the target model.

Optionally, the first information includes at least one of measurement resource information, measurement time, and a measurement quantity, where
the measurement resource information includes a measurement resource indication and an order of measurement resource.

Optionally, the first information further includes an inference delay of the target model and a feedback time gap of an inference result of the target model.

Optionally, the target data includes a measured result of the measurement quantity of the measurement resource, or the target data includes a measured result of the measurement quantity of the measurement resource and identification information of the measurement resource.

Optionally, the second information includes any one of the following:
a mapping relationship between each element in the second dataset and a model input identifier of the target model;
a mapping relationship between each element in the second dataset and the model input identifier of the target model, and a preprocessing indication of the element in the second dataset; and
a mapping relationship between each element in the second dataset and the model input identifier, and an implicit mapping method, where the implicit mapping method is for indicating that the model input identifier is determined based on target information in the second dataset, where
the second dataset is determined based on a valid measurement time window associated with the target data and the target model.

Optionally, the second information includes any one of the following:
a mapping relationship between the target data and a model input identifier of the target model;
a mapping relationship between the target data and the model input identifier of the target model, and a preprocessing indication of the target data; and
a mapping relationship between the target data and the model input identifier, and an implicit mapping method, where the implicit mapping method is for indicating that the model input identifier is determined based on target information in the target data.

Optionally, the first information further includes a virtual identifier, and the target information includes at least one of identification information of a measurement resource, measurement time, and the virtual identifier.

Optionally, the preprocessing indication includes at least one of the following: a standardization indicator, a normalization indicator, an eigenvalue decomposition indicator, a differential privacy indicator, and a one-hot encoding indicator.

It may be understood that, the implementation process of each implementation mentioned in this embodiment may refer to the related description in the model processing method embodiments, and the same technical effect is achieved. Details are not described herein again to avoid repetition.

An embodiment of this application further provides a network side device. The network side device includes a processor and a communication interface. The communication interface is coupled to the processor, and the processor is configured to execute a program or instructions, to implement the steps of the method embodiments as shown in FIG. 2 or FIG. 6. The network side device embodiment corresponds to the foregoing method embodiments of the network side device. Implementation processes and implementations of the foregoing method embodiments are all applicable to the network side device embodiment, and the same technical effect can be achieved.

Specifically, an embodiment of this application further provides a network side device. As shown in FIG. 11, the network side device 1100 includes: an antenna 111, a radio frequency apparatus 112, a baseband apparatus 113, a processor 114, and a memory 115. The antenna 111 is connected to the radio frequency device 112. In an uplink direction, the radio frequency apparatus 112 receives information by using the antenna 111, and sends the received information to the baseband apparatus 113 for processing. In a downlink direction, the baseband apparatus 113 performs processing on information to be sent and sends processed information to the radio frequency apparatus 112. The radio frequency apparatus 112 performs processing on the received information and sends the processed information through the antenna 111.

The method performed by the network side device in the above embodiments may be implemented in the baseband apparatus 113. The baseband apparatus 113 includes a baseband processor.

For example, the baseband apparatus 113 may include at least one baseband board. A plurality of chips are arranged on the baseband board. As shown in FIG. 11, for example, one of the chips is a baseband processor and is connected to the memory 115 through a bus interface to invoke a program in the memory 115 to perform operations of the network device shown in the above method embodiments.

The network side device may further include a network interface 116. The interface is, for example, a common public radio interface (Common Public Radio Interface, CPRI).

Specifically, the network side device 1100 in this embodiment of this application further includes instructions or a program stored in the memory 115 that are executable on the processor 114. The processor 114 calls the instructions or program in the memory 115 to perform the method performed by the modules in FIG. 7 or FIG. 8, and the same technical effect is achieved. Details are not described herein again to avoid repetition.

An embodiment of this application further provides a readable storage medium. The readable storage medium stores a program or instructions. The program or the instructions, when executed by a processor, implement the processes of the embodiment of the foregoing model processing method, and the same technical effect can be achieved. Details are not described herein again to avoid repetition.

The processor is the processor in the terminal in the foregoing embodiment. The readable storage medium includes a computer readable storage medium, like a computer read-only memory ROM, a random access memory RAM, a magnetic disk, or an optical disc. In some examples, the readable storage medium may be a non-transitory readable storage medium.

An embodiment of this application further provides a chip. The chip includes a processor and a communication interface. The communication interface is coupled to the processor, and the processor is configured to execute a program or instructions, to implement the processes of the embodiment of the foregoing model processing method, and the same technical effect can be achieved. Details are not described herein again to avoid repetition.

It should be understood that, the chip mentioned in this embodiment of this application may also be referred to as a system level chip, a system chip, a chip system, or a system on chip, and the like.

An embodiment of this application further provides a computer program/program product. The computer program/program product is stored in a storage medium and is executed by at least one processor to implement the processes of the embodiment of the foregoing model processing method, and the same technical effect can be achieved. Details are not described herein again to avoid repetition.

An embodiment of this application further provides a wireless communication system. The system includes a first device and a second device. The first device is configured to perform the steps of the method as described at a first device side, and the second device is configured to perform the steps of the method as described at a second device side.

It needs to be noted that, in this specification, the terms "include", "comprise", or any other variant thereof are intended to cover a non-exclusive inclusion, so that a process, a method, an article, or an apparatus that includes a list of elements not only includes the elements but also includes other elements which are not expressly listed, or further includes elements inherent to such process, method, article, or apparatus. Without further limitation, an element defined by the sentence "including a " does not exclude existence of other identical elements in the process, method, article, or apparatus including the element. In addition, it should be noted that, the protection scope of the method and apparatus in the implementations of this application is not limited to performing functions in the order shown or discussed, and may further include performing functions in a substantially simultaneous manner or in a reverse order based on the functions involved. For example, the described methods may be performed in an order different from the described order, and various steps may be added, omitted, or combined. In addition, the features described with reference to some examples can be combined in other examples.

According to the description in the foregoing implementations, a person skilled in the art may clearly learn that the method according to the foregoing embodiments may be implemented by a computer software product with a necessary general-purpose hardware platform, or certainly by hardware. The computer software product is stored in a storage medium (like a ROM, a RAM, a magnetic disk, and an optical disk), including several instructions to enable a terminal or a network side device to perform the method in the embodiments of this application.

The embodiments of this application have been described above with reference to the accompanying drawings. However, this application is not limited to the foregoing specific implementations. The foregoing specific implementations are merely examples and not limitative. Inspired by this application, a person of ordinary skill in the art may further make many modifications of the implementations without departing from the purposes of this application and the protection scope of the claims, and the implementations shall all fall within the protection scope of this application.

## Claims

1. A model processing method, comprising:
obtaining, by a first device, first information and second information, wherein the first information is for determining target data for target model inference, and the second information is for indicating a mapping relationship between the target data for the target model inference and an input of a target model;
performing, by the first device, data acquisition based on the first information, to obtain the target data; and
determining, by the first device, input data of the target model based on the second information and the target data.

2. The method according to claim 1, wherein the first information comprises at least one of measurement resource information, measurement time, and a measurement quantity, wherein
the measurement resource information comprises a measurement resource indication and an order of measurement resource.

3. The method according to claim 2, wherein the first information further comprises an inference delay of the target model and a feedback time gap of an inference result of the target model.

4. The method according to claim 2, wherein the target data comprises a measured result of the measurement quantity of the measurement resource, or the target data comprises a measured result of the measurement quantity of the measurement resource and identification information of the measurement resource.

5. The method according to any one of claims 1 to 4, wherein the second information comprises a first mapping relationship between the target data and a dataset and a second mapping relationship between the dataset and a model input, and the determining, by the first device, input data of the target model based on the second information and the target data comprises:
generating, by the first device, a first dataset based on the target data and the first mapping relationship;
determining, by the first device, a second dataset based on the first dataset and a valid measurement time window associated with the target model; and
determining, by the first device, the input data of the target model based on the second dataset and the second mapping relationship.

6. The method according to claim 5, wherein the second mapping relationship comprises any one of the following:
a mapping relationship between each element in the dataset and a model input identifier of the target model;
a mapping relationship between each element in the dataset and a model input identifier of the target model, and a preprocessing indication of the element in the dataset; and
a mapping relationship between each element in the dataset and a model input identifier, and an implicit mapping method, wherein the implicit mapping method is for indicating that the model input identifier is determined based on target information in the dataset.

7. The method according to any one of claims 1 to 4, wherein the determining, by the first device, input data of the target model based on the second information and the target data comprises:
determining, by the first device, the input data of the target model based on the second information, target reference time, and the target data, wherein
the target reference time is for representing reference time for the target model inference.

8. The method according to claim 7, wherein the second information comprises any one of the following:
a mapping relationship between the target data and a model input identifier of the target model;
a mapping relationship between the target data and a model input identifier of the target model, and a preprocessing indication of the target data; and
a mapping relationship between the target data and a model input identifier, and an implicit mapping method, wherein the implicit mapping method is for indicating that the model input identifier is determined based on target information in the target data.

9. The method according to claim 6 or 8, wherein the first information further comprises a virtual identifier, and the target information comprises at least one of identification information of a measurement resource, measurement time, and the virtual identifier.

10. The method according to claim 6 or 8, wherein the preprocessing indication comprises at least one of the following: a standardization indicator, a normalization indicator, an eigenvalue decomposition indicator, a differential privacy indicator, and a one-hot encoding indicator.

11. A model processing method, comprising:
sending, by a second device, first information and second information to a first device, wherein
the first information is for determining target data for target model inference, and the second information is for indicating a mapping relationship between the target data for the target model inference and an input of a target model.

12. The method according to claim 11, wherein the first information comprises at least one of measurement resource information, measurement time, and a measurement quantity, wherein
the measurement resource information comprises a measurement resource indication and a measurement resource sequence.

13. The method according to claim 12, wherein the first information further comprises an inference delay of the target model and a feedback time gap of an inference result of the target model.

14. The method according to claim 12, wherein the target data comprises a measured result of the measurement quantity of the measurement resource, or the target data comprises a measured result of the measurement quantity of the measurement resource and identification information of the measurement resource.

15. The method according to any one of claims 11 to 14, wherein the second information comprises a first mapping relationship between the target data and a dataset, and a second mapping relationship between the dataset and a model input, and the second mapping relationship comprises any one of the following:
a mapping relationship between each element in the dataset and a model input identifier of the target model;
a mapping relationship between each element in the dataset and a model input identifier of the target model, and a preprocessing indication of the element in the dataset; and
a mapping relationship between each element in the dataset and a model input identifier, and an implicit mapping method, wherein the implicit mapping method is for indicating that the model input identifier is determined based on target information in the dataset.

16. The method according to any one of claims 11 to 14, wherein the second information comprises any one of the following:
a mapping relationship between the target data and a model input identifier of the target model;
a mapping relationship between the target data and the model input identifier of the target model, and a preprocessing indication of the target data; and
a mapping relationship between the target data and the model input identifier, and an implicit mapping method, wherein the implicit mapping method is for indicating that the model input identifier is determined based on target information in the target data.

17. The method according to claim 15 or 16, wherein the first information further comprises a virtual identifier, and the target information comprises at least one of identification information of a measurement resource, measurement time, and the virtual identifier.

18. The method according to claim 15 or 16, wherein the preprocessing indication comprises at least one of the following: a standardization indicator, a normalization indicator, an eigenvalue decomposition indicator, a differential privacy indicator, and a one-hot encoding indicator.

19. A model processing apparatus, comprising:
an obtaining module, configured to obtain first information and second information, wherein the first information is for determining target data for target model inference, and the second information is for indicating a mapping relationship between the target data for the target model inference and an input of a target model;
an acquiring module, configured to perform data acquisition based on the first information, to obtain the target data; and
a determining module, configured to determine input data of the target model based on the second information and the target data.

20. A model processing apparatus, comprising:
a first sending module, configured to send first information and second information to a first device, wherein
the first information is for determining target data for target model inference, and the second information is for indicating a mapping relationship between the target data for the target model inference and an input of a target model.

21. A terminal, comprising a processor and a memory, wherein the memory stores a program or instructions executable on the processor, and the program or the instructions, when executed by the processor, implement the steps of the model processing method according to any one of claims 1 to 19.

22. A network side device, comprising a processor and a memory, wherein the memory stores a program or instructions executable on the processor, and the program or the instructions, when executed by the processor, implement the steps of the model processing method according to any one of claims 1 to 19.
